(19) Europäisches Patentamt / European Patent Office / Office européen des brevets

(11) **EP 2 642 871 B1**

(12) **EUROPEAN PATENT SPECIFICATION**

(45) Date of publication and mention
of the grant of the patent:
**17.05.2017 Bulletin 2017/20**

(21) Application number: **11787837.1**

(22) Date of filing: **17.11.2011**

(51) Int Cl.:
*A23F 5/02* (2006.01)          *A23F 5/36* (2006.01)
*A23L 2/52* (2006.01)

(86) International application number:
**PCT/EP2011/070373**

(87) International publication number:
**WO 2012/069359 (31.05.2012 Gazette 2012/22)**

(54) **PRODUCTS WITH IMPROVED FOAMING PROPERTIES**

PRODUKTE MIT VERBESSERTEN SCHÄUMUNGSEIGENSCHAFTEN

PRODUITS AUX PROPRIÉTÉS MOUSSANTES AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2010 EP 10192145**

(43) Date of publication of application:
**02.10.2013 Bulletin 2013/40**

(73) Proprietor: **Nestec S.A.**
**1800 Vevey (CH)**

(72) Inventors:
• **MORA, Frederico**
  **CH-1205 Genève (CH)**
• **LELOUP, Valérie Martine, Jeanine**
  **CH-1350 Orbe (CH)**

(74) Representative: **Elleby, Gudrun**
  **Nestec S.A.**
  **Centre de Recherche Nestlé**
  **Vers-chez-les-Blanc**
  **Case postale 44**
  **1000 Lausanne 26 (CH)**

(56) References cited:
EP-A1- 0 323 592          EP-A1- 1 600 461
EP-A1- 1 712 137          WO-A1-2009/040249
WO-A1-2010/124936

**Description**

**Field of the invention**

The present invention relates to improvements of foaming properties achieved by using unroasted coffee solids, and specifically to powdered products with improved foaming properties upon dissolution.

**Background**

Foaming of liquids is important in many applications, e.g. many food and beverage applications such as preparation of coffee, cocoa or the like. The ability of a liquid to form a foam and the stability of the foam is therefore important. In some instances, a liquid, e.g. a beverage, is prepared from a dried soluble powder. In this case the formation of a stable foam when the powder is dissolved may be desired, this is e.g. the case for espresso coffee prepared from instant powder, where the presence of a fine foam layer, so-called crema, is important for the consumer perception of the quality of the beverage. Also if an espresso is prepared from a liquid coffee extract, e.g. in a vending machine, there is a desire for the formation of a fine and stable crema. WO 2009/040249 (Nestec S.A.) describes a method of producing a dry soluble coffee extract that produces good crema upon dissolution. EP 1600461 describes the use of an arabinogalactan isolate from green coffee beans for stabilizing foams in foodstuffs.

EP 0323592 describes a foaming coffee beverage prepared by mixing instant coffee powder with water whilst agitating to form gas bubbles.

There is still a desire to improve the foaming properties of coffee extracts.

**Summary of the invention**

The inventors have found that unroasted coffee solids improve the volume and stability of the foam formed when gas is released into a liquid, e.g. by dissolution of a porous foaming powder. Accordingly, the present invention relates to a dried soluble powder product comprising unroasted coffee solids and with a foaming particle porosity of at least 20 %, as described in claim 1. In further embodiments the invention relates to a method of producing a dried soluble coffee product; a method of producing a foamed coffee beverage; and use of unroasted coffee solids to improve the foaming properties of a liquid.

**Brief description of the figures**

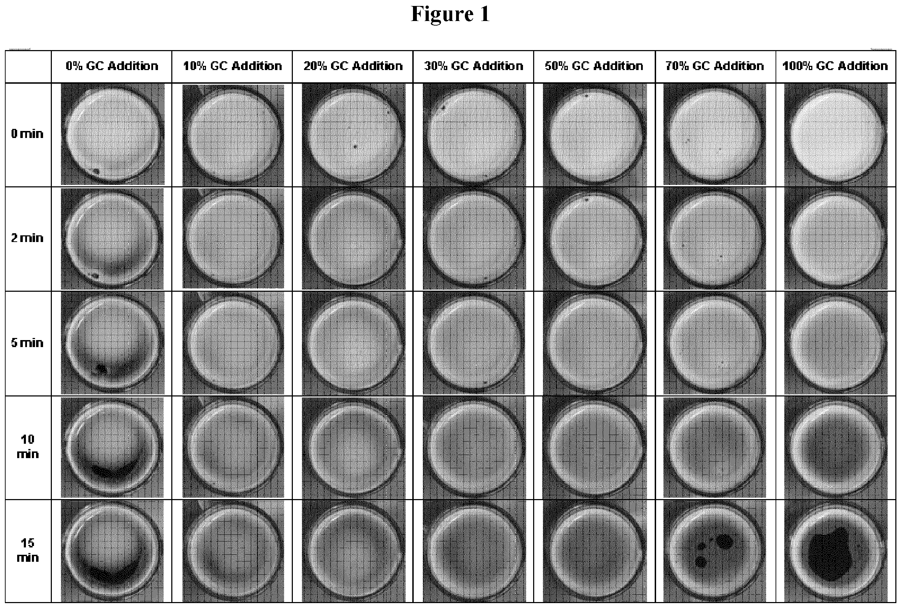

Figure 1 shows the foam at different times after reconstitution of porous coffee powders comprising varying amounts of green coffee solids.

**Detailed description of the invention**

The present invention relates to foaming liquids and powders that can be used to prepare foaming liquids. An example of a foaming liquid according to the invention is a beverage such as coffee. Instant coffee powder is well known for the preparation of a coffee beverage and is an example of a powder that can be used to prepare a foaming liquid according to the invention. A coffee beverage or instant coffee powder is produced from a coffee extract. A foaming liquid is produced by introducing gas into a liquid to produce a sufficient amount of bubbles to form a foam on the top of the liquid. The foam may be produced directly in the liquid, e.g. in the case of a coffee beverage just before consumption of the coffee beverage, by introducing gas bubbles into the liquid, e.g. by agitating or stirring the liquid manually or by a suitable machine. Foam may also be produced by a dried soluble powder, e.g. in the form of a soluble, or instant, coffee beverage powder, which is porous and contains gas that is released in the form of bubbles when the powder is dissolved. Such a powder may be produced by drying a liquid, e.g. a liquid coffee extract, so as to form a dried porous soluble powder. When reconstituted, e.g. in the case of a soluble coffee powder with hot or cold water or milk to form a coffee beverage, the gas entrapped in the pores of the powder will be released into the liquid and forms a foam on the surface.

Unroasted coffee solids

By unroasted coffee solids are meant coffee solids that have not been subjected to a roasting process. Coffee solids according to the invention are any compounds derived from a coffee plant, excluding water. Coffee solids according to the invention are derived from coffee beans. Roasting of coffee solids are normally performed on the raw green coffee beans before grinding and extraction of the beans, but may also be performed on the ground beans or on an extract of soluble coffee solids that has been dried. By roasting is meant a dry, or almost dry, heat treatment of the coffee beans or coffee extract as opposed to e.g. steaming or cooking of coffee beans in water, e.g. under pressure. During roasting of coffee beans drying takes place. The green beans will usually comprise about 12-16% water before roasting, and as a result of the roasting the moisture level will be reduced, e.g. to about 2%. Roasting is thus different from a heat treatment in water or with steam. The purpose of roasting of coffee is usually to develop the specific flavour notes characteristic of roasted coffee. These flavours result from processes such as e.g. pyrolisation of coffee solids and Maillard reactions.

In one embodiment of the invention, roasting means a heat treatment at a temperature above 200°C at a moisture level below 4% (by weight), preferably below 3%. The moisture level is understood as the proportion of water contained in the coffee beans or coffee extract being roasted. As explained above, the moisture level at the beginning of the roasting may be higher than 4%, but during roasting the moisture level is reduced to below 4%, preferably below 3%.

The unroasted coffee solids of the invention originate from extraction of raw, also called green, coffee beans. The green coffee beans may be whole or ground when extracted. The green coffee beans are extracted with water, without use of an organic solvent. Green coffee beans may be extracted with water in any suitable manner. Methods for water extraction of green and/or roasted coffee beans are well known in the art. E.g. US 5,972,409, discloses suitable methods for extraction of green coffee beans. Green coffee beans are extracted with water at a temperature above 130°C, such as above 140°C, or above 150°C. Extraction may be performed in one or more stages at different temperatures, e.g. a first stage at less than 120°C and a second stage at above 140°C.

A product of the invention comprises at least 1 g of unroasted coffee solids per 100 g of total coffee solids in the product, such as at least 2 g or at least 5 g of unroasted coffee solids per 100 g of total coffee solids. According to the invention the product comprises between 1 g and 90 g of unroasted coffee solids per 100 g of total coffee solids, more preferred between 5 g and 80 g of unroasted coffee solids per 100 g of total coffee solids, even more preferred between 10 g and 70 g of unroasted coffee solids per 100 g of total coffee solids, or between 20 g and 50 g of unroasted coffee solids per 100 g of total coffee solids.

Dried soluble powder

By a dried soluble powder is meant a powder consisting of particles that are soluble in a liquid, preferably in water. The powders are dried meaning that they comprise no or minor amounts of water, so that they appear in a solid state. The dried soluble powder comprises unroasted coffee solids and has a foaming porosity of at least 20%, preferably at least 30%, more preferably at least 35%, and most preferably at least 40%.

Foaming porosity is a measure of the porosity which contributes to foaming and characterises the potential foaming ability of the powder of the invention. Indeed, open pores will not contribute to the foaming as much, or even in some cases not at all compared to closed pores. Pores with opening diameter of less than 2 micrometres may also contribute to foam since the capillary pressure in these pores is greater than the ambient pressure and this may enable foam formation. In the present invention, the foaming porosity is obtained by including closed pores and open pores having an opening diameter of less than 2 micrometres.

Thus, for the purpose of measuring the foaming porosity, only closed pores as well as open pores having an opening diameter of less than 2 micrometres are taken into account as these are considered to contribute to foaming. The foaming porosity is obtained by the ratio of the volume of pores contributing to foaming over the volume of the aggregate excluding the volume of open pores having an opening diameter above 2 micrometres. This can be measured by mercury porosimetry or X-ray tomography.

The foaming porosity of conventional non-foaming coffee powders is normally found to be less than 15%.

The soluble powder particles of the invention preferably have a total porosity of at least 40%, preferably at least 55%, even more preferably at least 70%. In a preferred embodiment, the powder particle total porosity is between 65 and 85%, more preferably between 65 and 80%, even more preferably between 70 and 80%, most preferably between 70 and 75%.

Total porosity can be measured by means known in the art. For instance, the total porosity can be calculated by the following equation: $(Vp-Vcm)/Vp \cdot 100$, wherein Vp is the total volume of the particle and Vcm is the volume of the matrix in the particle. These values may be determined by standard measurements such as mercury porosimetry or also by x-ray tomographic technique.

The powder of the invention is therefore characterised by its high porosity which allows an increased amount of crema to be formed upon reconstitution of the powder.

The pores of the present powder may have an average diameter $D_{50}$ of less than 80 microns, preferably less than 60 microns, more preferably less than 40 microns, most preferably less than 25 microns. The pore size distribution in the particles can be measured by X-ray tomography.

The powder of the invention may also be characterised by the span factor (n) of the pore size distribution in the particle, which is obtained from X-ray tomography. The span factor of the distribution is calculated by the following equation:

$$\text{Span} = \frac{D_{90} - D_{10}}{D_{50}}$$

Wherein $D_{90}$, $D_{10}$ and $D_{50}$ represents the diameters where 90%, 10% and 50%, respectively, of the pore volume is in pores with a size below this value. Thus, a distribution span factor (n) of less than 4, preferably less than 3, more preferably less than 2, most preferably less than 1.5 characterises the pores of the powder according to the invention. The lower the span factor (n), the more uniform and sharp is the size distribution.

The particle size of the powder particles may e.g. be characterised by the median particle diameter (volume distribution), X50. X50 is preferably in the range between 50 and 500 microns, such as e.g. between 100 and 300 microns, or between 150 and 250 microns.

The dried soluble powder of the invention is preferably a food or beverage powder. A food powder may e.g. be a dried soup or condiment powder. A dried soluble beverage powder may e.g. be a dried soluble instant beverage powder, such as e.g. a dried soluble coffee powder, a dried soluble cocoa powder, or a dried soluble malt extract powder.

Method of producing a dried soluble coffee product

In another aspect the invention relates to a method of producing a dried soluble coffee product comprising: a) providing a liquid coffee extract comprising unroasted coffee solids; and b) injecting gas into said liquid coffee extract; and c) drying said liquid coffee extract, as described in claim 7. The gas to be injected into the liquid may be any suitable gas such as e.g. atmospheric air, nitrogen, carbon dioxide, nitrous oxide, or argon. The gas may be injected into the liquid coffee extract in any suitable way, e.g. by sparging the gas into the liquid coffee extract through a nozzle designed to form small bubbles. In a preferred embodiment the liquid coffee extract is subjected to pressure during or after the injection of the gas, e.g. to a pressure between 50 and 400 bar, preferably between 150 and 350 bar. The pressure may e.g. be created by passing the liquid coffee extract through a high pressure pump, the gas being injected into the liquid coffee extract before or after the high pressure pump. The gas injection may be performed in a way so that the gas is entirely solubilised in the coffee extract, or it may be present in the extract as gas bubbles, e.g. with a size of 1-10 microns. The liquid coffee extract may be homogenised after injection of the gas to reduce the size of the gas bubbles before drying. In a preferred embodiment, the liquid coffee extract has a dry matter content of 35 to 70% when the gas is injected. The temperature of the liquid coffee extract when the gas is injected is preferably between 10°C and 70°C, more preferably between 30°C and 70°C. It may be advantageous to keep the oil content of the coffee extract low.

The liquid extract is dried after gas has been injected. Drying may be performed by any suitable method ensuring the required properties of the dry soluble coffee powder.

In a preferred embodiment the liquid coffee extract is spray dried. Methods for spray drying of coffee extracts are well known in the art. If the injected gas is completely dissolved in the liquid coffee extract, the amount should be sufficient to ensure that it forms gas bubbles in the sprayed droplets due to the rapid pressure drop at the atomisation nozzle. The spray drying tower temperature during spray drying may e.g. be between 70°C and 115°C. The presence of gas bubbles ensures the formation of the required porous structure of the dried particles.

In another preferred embodiment the liquid coffee extract is subjected to spray-freezing after injection of the gas. Spray freezing consists in spraying a liquid into droplets and simultaneously freezing said droplets. The temperature of the extract should preferably be brought to between 0°C and 60°C, preferably between 0°C to 30°C, such as between 10°C and 25°C or between 15°C and 30°C. The foamed extract may enter a high pressure pump or homogeniser, and the pressure may e.g. be increased to 65 to 400 bar, preferably 85 to 250 bar. The coffee extract to be spray frozen preferably has a solids content above 40%, more preferably above 50%. The extract may be pumped to the top of a spray-freezing tower where the extract is atomised. The spray-freezing process may be carried out by means of direct or indirect contact with cryogenic fluids such as liquid nitrogen, cold air, and liquid carbon dioxide. A suitable freeze spraying process is e.g. disclosed in WO 2009/080596 (Nestec S.A.). The resulting porous spray-frozen powder may be freeze-dried to yield a porous soluble coffee product of the invention.

Suitable methods for injecting gas into a liquid coffee extract and drying it to produce a dried soluble coffee product are e.g. the methods disclosed in WO 2009/040249 (Nestec S.A.) and US 5,882,717 (Kraft Foods Inc.).

A soluble coffee product powder may be an agglomerated powder. Methods for agglomeration of spray frozen powders, e.g. coffee powders, are well known in the art. An agglomerated powder may e.g. be produced by sintering of e.g. a spray dried or a spray frozen powder, e.g. as disclosed in WO 2009/059938 (Nestec S.A.) or WO 2009/080596 (Nestec S.A.).

Method of producing a foamed coffee beverage

In one embodiment the invention relates to a method of producing a foamed coffee beverage, comprising a) providing a liquid coffee extract comprising unroasted coffee solids; and b) introducing gas bubbles into the liquid coffee extract to create a foam, as described in claim 11. Gas bubbles may be introduced into the liquid in any suitable way, e.g. by agitating or stirring the liquid manually or by a suitable machine, and/or by sparging gas into the liquid coffee extract. Sparging is the process of injecting gas directly into the liquid through a nozzle or other suitable equipment. The gas introduced into the liquid may be any suitable gas, e.g. atmospheric air, steam, nitrogen, and/or carbon dioxide.

## EXAMPLES

Mercury porosimetry to evaluate foaming porosity, particle porosity

AutoPore IV 9520 was used for the structure evaluation (Micromeritics Inc. Norcrose, GA, USA). The operation pressure for Hg intrusion was from 2.7579 to 62053 kPa (0.4 to 9000 psia) (with low pressure from 2.7579 to 275.79 kPa (0.4 to 40 psia) and high pressure port from 137.90 to 62053 kPa (20 to 9000 psia)). The pore diameter under this pressure is ranged from 500 to 0.01 $\mu$m. The data reported was volume (ml/g) at different pore diameter (um).
About 0.1 to 0.4 g of samples was precisely weighted and packed in a penetrometer (volume 3.5 ml, neck or capillary stem diameter 0.3 mm and stem volume of 0.5 ml).
After the penetrometer was inserted to the lower pressure port, sample was evacuated at 7.5842 kPa/min (1.1 psia/min), then switch to a medium rate at 3.4474 kPa (0.5 psia) and a fast rate at 900 $\mu$m Hg.
The evacuating target was 60 $\mu$m Hg. After reaching the target, the evacuation was continued for 5 min before Hg is filled in.
The measurement was conducted in set-time equilibration. That is, the pressure points at which data are to be taken and the elapsed time at that pressure in the set-time equilibration (10 sec) mode. Roughly 140 data points were collected at the pressure ranges.
The bulk volume of the granulate was obtained from the initial volume of mercury and the sample holder. The volume of the open pores with opening diameter greater than 2 micrometers (3) was obtained after intrusion with mercury up to a diameter of 2 micrometer. Subtraction of this volume from the bulk volume of the granulate gave the new volume of the granulate which comprises the closed pores (2), open pores with opening diameters less than 2 micrometers (4) and the volume of the coffee matrix. The volume of the closed pores, open pores with opening larger than 2 micrometers in the granulate was obtained by subtracting the volume of the coffee matrix from the new volume of the granulate. The volume of the coffee matrix was obtained from the weight of the sample and coffee matrix density. The foaming porosity is the ratio of the volume of closed pores and open pores having an opening diameter of less than 2 micrometer over the new volume of the granulate.

Foam volume

Foam volume was determined by two different methods as follows.

Whipping

Roasted Coffee extracts and green coffee extract were dissolved in MilliQ water at 75°C in different ratios as described in the table below to reach a total solids concentrations of 2%. 83mL of each solution was passed through a whipping device (15000rpm for 20s) and the foamed liquid was recovered in a volumetric cylinder. The foam volume was recorded every 30s up to 360s. The initial foam volume and foam decay (0-120s) are extrapolated from the foam curve using a logarithmic model.

Foam Measuring Device (FMD)

4g of powdered roasted coffee extract and powdered green coffee extract in different ratios as described in the table below, were added in a simple device consisting of a reconstitution vessel connected to a water reservoir, which initially was blocked off with a valve. After reconstitution of the powder mixture with 200 mL of water at 85°C, the reconstituted vessel was closed with a special lid that ended in a scaled capillary. The valve between the reconstitution vessel and the water reservoir was then open and the water (standard tap water at any temperature) pushed the reconstituted beverage upwards into the capillary, thus facilitating the reading of the crema volume.

**Example 1**

A roasted coffee powder was produced by extracting ground roasted coffee with water using conventional technology for coffee extraction for the production of soluble coffee. Liquid nitrogen was injected into the liquid coffee extract following the method disclosed in WO 2009/040249 (Nestec S.A.) and the extract was spray dried to produce a foaming dried soluble coffee product of the invention. This method was found to produce dried soluble coffee powders with a foaming porosity as defined herein of at least 40%.

A green (unroasted) coffee powder was produced from whole green coffee beans with water in the same way as described above for roasted coffee beans.

The initial foam volume produced upon reconstitution of the coffee powder with water was measured as described above for roasted coffee powder, green coffee powder and mixtures thereof. The results are given in table 1 below.

Table 1. Foam volumes determined by KOMO and FMD for roasted coffee powder, green coffee powder and mixtures thereof.

| Ratio of green coffee to roasted coffee | Foam volume by Whipping (mL) | Foam volume by FMD after 90s (mL) |
|---|---|---|
| 100% roasted coffee | 33.9 | 8.6 |
| 10:90 | 41.5 | 8.8 |
| 20:80 | 40.6 | 8.8 |
| 30:70 | 50.4 | 9.1 |
| 50:50 | 49.4 | 9 |
| 70:30 | 46.9 | 8.8 |
| 100% green coffee | 50.3 | 8.7 |

To determine the stability of the foam, the same samples of coffee powders were reconstituted in water in cups by dissolving 1g of coffee extract in the ratios as described above with 50 mL MilliQ-water and the cups were photographed from above immediately after reconstitution (0 min), and 2 min, 5 min, 10 min and 15 min after reconstitution. The photographs are shown in figure 1.

**Claims**

1. A dried soluble powder product comprising between 1 g and 90 g unroasted coffee solids per 100 g of total coffee solids and with a foaming porosity of at least 20 %, wherein the unroasted coffee solids originate from extraction of raw, also called green, coffee beans with water at a temperature above 130°C, without use of an organic solvent

2. The dried soluble powder product of claim 1 wherein the powder particles have a total porosity of at least 40 %.

3. The dried soluble powder product of claim 1 or 2 wherein the powder particles have pores with an average diameter $D_{50}$ of less than 80 micrometer.

4. The dried soluble powder product of any of the preceding claim wherein the powder particles have pores with a size distribution **characterised by** a size distribution span factor of less than 4.

5. The dried soluble powder product of any of the preceding claims being an instant beverage powder.

6. The dried soluble powder product of claim 5 being an instant coffee powder.

7. A method of producing a dried soluble coffee product comprising:

   a) providing a liquid coffee extract comprising between 1 g and 90 g unroasted coffee solids per 100 g of total coffee solids, the unroasted coffee solids originating from extraction of raw, also called green, coffee beans with water at a temperature above 130°C without use of an organic solvent; and
   b) injecting gas into said liquid coffee extract; and
   c) drying said liquid coffee extract.

8. The method of claim 7 wherein the liquid coffee extract is subjected to pressure during the gas injection of step b).

9. The method of any of claims 7 or 8 wherein the liquid coffee extract is dried by spray drying in step c).

10. The method of any of claims 7-9 wherein the liquid coffee extract is homogenised after the injection of gas in step b), and before the drying of step c).

11. A method of producing a foamed coffee beverage, comprising:

a) providing a liquid coffee extract comprising between 1 g and 90 g unroasted coffee solids per 100 g of total coffee solids, the unroasted coffee solids originating from extraction of raw, also called green, coffee beans with water at a temperature above 130°C without use of an organic solvent; and
b) introducing gas bubbles into the liquid coffee extract to create a foam.

12. The method of claim 11 wherein gas bubbles are introduced into the liquid coffee extract by agitating or stirring the liquid coffee extract.

13. The method of any of claims 11 or 12 wherein gas bubbles are introduced into the liquid coffee extract by sparging gas into the liquid coffee extract.

14. Use of between 1 g and 90 g unroasted coffee solids per 100 g of total coffee solids originating from extraction of raw, also called green, coffee beans with water at a temperature above 130°C without use of an organic solvent to improve the foaming properties of a liquid.

15. Use according to claim 14 wherein the liquid is a beverage.

16. Use according to any of claims 14 or 15 wherein the liquid comprises a coffee extract.


**Patentansprüche**

1. Getrocknetes, lösliches Pulverprodukt, das zwischen 1 g und 90 g ungeröstete Kaffeefeststoffe pro 100 g Gesamt-Kaffeefeststoffgehalt umfasst und eine Schaumporosität von mindestens 20 % aufweist, wobei die ungerösteten Kaffeefeststoffe aus der Extraktion von rohen, auch als grün bezeichneten Kaffeebohnen mit Wasser bei einer Temperatur von über 130 °C ohne Verwendung eines organischen Lösemittels stammen.

2. Getrocknetes, lösliches Pulverprodukt nach Anspruch 1, wobei die Pulverpartikel eine Gesamtporosität von mindestens 40 % aufweisen.

3. Getrocknetes, lösliches Pulverprodukt nach Anspruch 1 oder 2, wobei die Pulverpartikel Poren mit einem durchschnittlichen Durchmesser $D_{50}$ von weniger als 80 Mikrometern aufweisen.

4. Getrocknetes, lösliches Pulverprodukt nach einem der vorstehenden Ansprüche, wobei die Pulverpartikel Poren mit einer Größenverteilung aufweisen, die durch einen Größenverteilungsfaktor von weniger als 4 gekennzeichnet ist.

5. Getrocknetes, lösliches Pulverprodukt nach einem der vorstehenden Ansprüche, bei dem es sich um ein Instant-Getränkepulver handelt.

6. Getrocknetes, lösliches Pulverprodukt nach Anspruch 5, bei dem es sich um ein Instant-Kaffeepulver handelt.

7. Verfahren zur Herstellung eines getrockneten, löslichen Kaffeeprodukts, umfassend:

a) Bereitstellen eines flüssigen Kaffee-Extrakts, der zwischen 1 g und 90 g ungeröstete Kaffeefeststoffe pro 100 g Gesamt-Kaffeefeststoffe umfasst, wobei die ungerösteten Kaffeefeststoffe aus der Extraktion von rohen, auch als grün bezeichneten Kaffeebohnen mit Wasser bei einer Temperatur von über 130 °C ohne Verwendung eines organischen Lösemittels stammen; und
b) Injizieren von Gas in den flüssigen Kaffee-Extrakt; und
c) Trocknen des flüssigen Kaffee-Extrakts.

**8.** Verfahren nach Anspruch 7, wobei der flüssige Kaffee-Extrakt während der Gasinjektion in Schritt b) mit Druck beaufschlagt wird.

**9.** Verfahren nach einem der Ansprüche 7 oder 8, wobei der flüssige Kaffee-Extrakt durch Sprühtrocknen in Schritt c) getrocknet wird.

**10.** Verfahren nach einem der Ansprüche 7 bis 9, wobei der flüssige Kaffee-Extrakt nach dem Injizieren von Gas in Schritt b) und vor dem Trocknen in Schritt c) homogenisiert wird.

**11.** Verfahren zur Herstellung eines geschäumten Kaffeegetränks, umfassend:

a) Bereitstellen eines flüssigen Kaffee-Extrakts, der zwischen 1 g und 90 g ungeröstete Kaffeefeststoffe pro 100 g Gesamt-Kaffeefeststoffe umfasst, wobei die ungerösteten Kaffeefeststoffe aus der Extraktion von rohen, auch als grün bezeichneten Kaffeebohnen mit Wasser bei einer Temperatur von über 130 °C ohne Verwendung eines organischen Lösemittels stammen; und
b) Einbringen von Gasblasen in den flüssigen Kaffee-Extrakt, um einen Schaum zu bilden.

**12.** Verfahren nach Anspruch 11, wobei die Gasblasen durch Schütteln oder Rühren des flüssigen Kaffee-Extrakts in den flüssigen Kaffee-Extrakt eingebracht werden.

**13.** Verfahren nach einem der Ansprüche 11 oder 12, wobei die Gasblasen in den flüssigen Kaffee-Extrakt mittels Einblasen von Gas in den flüssigen Kaffee-Extrakt eingebracht werden.

**14.** Verwendung von 1 g bis 90 g ungerösteter Kaffeefeststoffe pro 100 g Gesamt-Kaffeefeststoffen, die aus der Extraktion von rohen, auch als grün bezeichneten Kaffeebohnen mit Wasser bei einer Temperatur von über 130 °C ohne Verwendung eines organischen Lösemittels stammen, um die Schaumbildungseigenschaften einer Flüssigkeit zu verbessern.

**15.** Verwendung nach Anspruch 14, wobei es sich bei der Flüssigkeit um ein Getränk handelt.

**16.** Verwendung nach einem der Ansprüche 14 oder 15, wobei die Flüssigkeit einen Kaffee-Extrakt umfasst.

**Revendications**

**1.** Produit de poudre soluble séché comprenant entre 1 g et 90 g de solides de café non torréfié pour 100 g de solides de café totaux et avec une porosité mousseuse d'au moins 20 %,
dans lequel les solides de café non torréfié proviennent de l'extraction de grains de café brut, également appelé vert, avec de l'eau à une température supérieure à 130 °C sans utilisation d'un solvant organique.

**2.** Produit de poudre soluble séché selon la revendication 1, dans lequel les particules de poudre ont une porosité totale d'au moins 40 %.

**3.** Produit de poudre soluble séché selon la revendication 1 ou 2, dans lequel les particules de poudre ont des pores avec un diamètre moyen $D_{50}$ inférieur à 80 micromètres.

**4.** Produit de poudre soluble séché de l'une quelconque des revendications précédentes, dans lequel les particules de poudre ont des pores avec une distribution de taille **caractérisée par** un facteur de recouvrement de distribution de taille inférieur à 4.

**5.** Produit de poudre soluble séché de l'une quelconque des revendications précédentes, étant une poudre de boisson instantanée.

**6.** Produit de poudre soluble séché selon la revendication 5, étant une poudre de café instantané.

**7.** Procédé de production d'un produit de café soluble séché comprenant :

a) la fourniture d'un extrait de café liquide comprenant entre 1 g et 90 g de solides de café non torréfié pour 100 g de solides de café totaux, les solides de café non torréfié provenant de l'extraction de grains de café brut, également appelé vert, avec de l'eau à une température supérieure à 130 °C sans utilisation de solvant organique ; et

b) l'injection de gaz dans ledit extrait de café liquide ; et

c) le séchage dudit extrait de café liquide.

8. Procédé selon la revendication 7, dans lequel l'extrait de café liquide est soumis à une pression pendant l'injection de gaz de l'étape b).

9. Procédé selon l'une quelconque des revendications 7 ou 8, dans lequel l'extrait de café liquide est séché par séchage par atomisation à l'étape c).

10. Procédé selon l'une quelconque des revendications 7 à 9, dans lequel l'extrait de café liquide est homogénéisé après l'injection de gaz à l'étape b) et avant le séchage de l'étape c).

11. Procédé de production d'une boisson de café mousseuse, comprenant :

a) la fourniture d'un extrait de café liquide comprenant entre 1 g et 90 g de solides de café non torréfié pour 100 g de solides de café totaux, les solides de café non torréfié provenant de l'extraction de grains de café brut, également appelé vert, avec de l'eau à une température supérieure à 130 °C sans utilisation de solvant organique ; et

b) l'introduction de bulles de gaz dans l'extrait de café liquide afin de créer une mousse.

12. Procédé selon la revendication 11, dans lequel les bulles de gaz sont introduites dans l'extrait de café liquide par agitation ou brassage de l'extrait de café liquide.

13. Procédé selon l'une quelconque des revendications 11 ou 12, dans lequel les bulles de gaz sont introduites dans l'extrait de café liquide par barbotage de gaz dans l'extrait de café liquide.

14. Utilisation d'entre 1 g et 90 g de solides de café non torréfié pour 100 g de solides de café totaux provenant de l'extraction de grains de café brut, également appelé vert, avec de l'eau à une température supérieure à 130 °C sans utilisation d'un solvant organique afin d'améliorer les propriétés de formation de mousse d'un liquide.

15. Utilisation selon la revendication 14, dans laquelle le liquide est une boisson.

16. Utilisation selon l'une quelconque des revendications 14 ou 15, dans laquelle le liquide comprend un extrait de café.

Figure 1

**EP 2 642 871 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009040249 A
- EP 1600461 A
- EP 0323592 A
- US 5972409 A
- WO 2009080596 A
- US 5882717 A
- WO 2009059938 A